# EUROPEAN PATENT SPECIFICATION

(11) **EP 2 907 382 B1**
(45) Date of publication and mention of the grant of the patent: **22.11.2017**
(21) Application number: 14154791.9
(22) Date of filing: 12.02.2014
(51) Int. Cl.: A01K 85/00, A01K 95/00

(54) **Weight means for a fishing lure**
Gewichtmittel für einen Angelköder
Supports de poids pour leurre de pêche

(43) Date of publication of application: 19.08.2015
(73) Proprietor: W.C. Bradley/Zebco Holdings Inc, Tulsa, OK 74115 (US)
(72) Inventor: Prus, Adrian, 49492 Westerkappeln (DE)
(74) Representative: Bockhorni & Kollegen

(56) References cited:
- GB-A- 1 115 439
- JP-A- H1 118 649
- JP-U- H0 449 976
- JP-U- S6 456 665
- US-A- 2 729 014
- US-A- 5 661 923
- US-A1- 2009 265 975

## Description

The invention relates to a weight means for a fishing lure and a fishing lure system according to the preamble of claims 1 and 12.
In general, fishing lures are attached manually by the fisherman to the end of a fishing line. The shape, colour and size of the fishing lures are often designed to resemble prey that is eaten by fish so that the fish is attracted by the lure and bites into it. As the shape of prey naturally varies depending on the eating habits of fish, a specific type of lure needs to be provided for each type of fish. The lure usually comprises a hook and a means to attach the fishing line. When the fish is attracted to the prey, it bites into this hook and the fisherman can pull the line to catch the fish and lift the fish out of the water.
The depth range in which the fish resides depends on its hunting ground, biological circumstances such as breeding time or health status of fish and environmental circumstances such as the temperature of the water, the amount of sunlight and so on. In order to attract fish in deeper grounds, the lure has to be heavy in weight so that it sinks to the specific ground and floats in this area. Some fish swim closer to the water surface so that a lure with a lighter weight is required.

The disadvantage here is that the fisherman has to exchange the fishing lure each time when another water depth for fishing is desired. The fisherman has to pull the line out of the water, remove the lure from the line or even cut the fishing line from the eyelet and replace it with another lure having a different weight. Costs of purchase are consequently high if a different weighted lure is needed and each time a new water depth shall be achieved which makes fishing expensive in this respect. Furthermore, it is inconvenient to bring many different lures to the fishing side and find the lure that is suitable.
In order to overcome the afore-mentioned problems, fishermen attempted to provide a fishing lure that is adjustable in weight so that it can be adapted to the desired water depth. For example, US 2009/0300964 A1 provides a variable-depth fishing lure including an elongated lure body and a depth-control lip body at a front end. The lip body can be fixed to the front end of the lure body or formed integrally therewith. A lip extension is removably affixable to the lip body whereby the lip extension can have different lengths along its longitudinal axis for achieving different water depths when in use. Although this lure may be adequate for its intended uses, the fact that the means (lip extension) to adjust the depth is located completely outside the body makes it susceptible to fish strikes, snags or underwater debris. For example, fish strikes can easily remove the lip extension from the lure body or damage it making reuse of the extension impossible. Furthermore, the material of the lure and the lip extension is soft plastic or mouldable plastic material. This shortens its usable lifespan. Another disadvantage is that the lip extensions have to be purchased each when requiring a different length in order to obtain extension having different weights.
It is known from US 2,729,014 A to provide a weight means for a fishing lure body, wherein the weight means comprises a bolt for the uptake of a plurality of weight elements. Another fishing weight apparatus is disclosed in US 5,661,923 A. This apparatus comprises a spine and a retaining means onto which weight units can be disposed between a compression member and a locking cap, the latter restricting the longitudinal movement of the weight units relative to the spine. Further weight means for fishing lure bodies or fishing lure systems are known from JP H04 49976 U and US 2009/265 975 A1.
It is therefore the object of the present invention to provide a weight means for a lure body that is adjustable in weight, stable in its assembly with the lure body and less susceptible to impacts from the water environment, such as fish strikes or underwater debris. Furthermore, the weight means shall have a long lifespan whilst being, at the same time, reliable reusable whilst being inexpensive in purchase.
This object is achieved according to the invention by the features in the characterizing part of claims 1 and 12. Further embodiments of the invention will become apparent from the features of the dependent claims.

In accordance with the invention, a weight means according to claim 1 is provided for a fishing lure body whereby the weight means comprises a receiving means for the uptake of a plurality of weight elements and the weight means further comprises a detent means for arresting the weight elements arranged on the receiving means. A plurality of weight elements can be mounted onto the receiving means whereby the weight elements each have a given weight. The weight is preferably similar for each weight element. The weight of one weight element is preferably in between 2.5 to 50g, in particular in the range between 5 to 25g. Particularly preferred, the weight element has a weight of 15g. Depending on the water depth required for catching a fish, one or more weight elements are mounted onto the receiving means. In case a low water depth shall be achieved, none or only a low number of weight elements are added to the receiving means. In case a deeper water depth is required for specific fish that swim deeper in the sea, a higher number of weight elements is added to the receiving means. This allows the fisherman to locate the fishing lure deeper under the water surface at which the desired fish will be most inclined to feed. An advantage for the fisherman is that the assembly of weight elements on the receiving means is very simple. A further advantage is that the weight elements can be purchased as a single piece or in batches in case new weight elements are required. Especially the costs of each weight element are low because the weight elements are inexpensive and easy in manufacture.
The weight elements are provided in the form of a disc whereby the discs each have a first face and a second face with the first face comprising at least one recess and the second face comprising at least one projection. When the plurality of weight elements are stuck onto the receiving means, the second face of a first disc faces the first face of a second disk. Consequently, the projection of the first disc engages the recess of the adjacent second disc so that two discs are thereby partially stuck into each other and fixed to each other in their position coaxially to the receiving means. This is particularly advantageous when the weight element does not have a thread in the opening described above that may act as a stabilizing means. The projection and recess of the disc allows the weight elements to be stable along an axial line formed by the connection between projection and recess, which is parallel to the axis of the receiving means.

According to this invention, the receiving means is formed as a longitudinal bolt. Consequently, a plurality of weight elements can be stuck onto this bolt providing a very heavy weight means. The longitudinal bolt also allows stabilizing and balancing the weight means within a lure body that can be used to encase the weight means. Thereby, the length of the bolt can correspond to the length of the lure body.

A further embodiment provides a longitudinal bolt with one or more threaded portion(s). The threaded portion can be located anywhere along the bolt or provided repeatedly over the entire length. Particularly preferred is a bolt formed as a threaded bolt over its entire length. The threaded bolt further enables a stable connection with the detent means.

According to a particularly advantageous embodiment, the detent means is formed as a clamping device. This clamping device can be mounted onto the receiving means in order to arrest the weight elements and hold them in position. This allows a stable fixation of the weight elements on the receiving means and avoids a movement of the weight means along the receiving means which could lead to an abrasion of the weight elements and the receiving means shortening the lifespan of those elements. Particularly preferred, the detent means is formed as a nut. This nut can be a self-locking nut or another preferred nut-type. The nut generally has a hole with a thread so that it can be screwed onto the threaded bolt.

In another preferred embodiment, the weight elements are formed as plug-on elements to be stuck onto the receiving means. After a first plug-on element has been mounted onto the receiving means, a further one can be stuck behind and so on. In case one plug-on element weighs 15 g, two plug-on elements amount to 30g. The weight of the plug-on elements can than be added to the raw weight of the receiving means and the detent means (without plug-on elements) and summed up to a total weight of the weight means. Hence, in case the receiving means and the detent means have a raw weight of 50g and two plug-on elements are added, the total weight of the weight means amounts to 80g. The fishermen can thus easily determine and adjust the weight of the weight means and the depth to be reached. Again, depending on the fisherman's preferred water depths, more or less plug-on elements are mounted onto the receiving means. It is also possible to use the receiving means without plug-on elements as a weight. The plug-on elements are in particular provided with an opening for mounting onto the receiving means. This opening can be a circular hole in the middle of the plug-on element whereby other types of opening forms are possible whereby they shall always correspond to the form of the receiving means so that mounting of the plug-on element is possible. The plug-on element can have a thread so that it can be screwed onto the longitudinal threaded bolt.

In a further preferred embodiment of this invention, the receiving means comprises a base element that is either removable attached to one end of the longitudinal bolt or formed integrally with the bolt. In each case, the base element forms a stop for the weight elements. The base element has the form of a half-cut fish head, being partially streamlined. The receiving means forms an elongation of the base element.

Another preferred embodiment comprises an absorptive element, formed as a sheet or disc, preferably a felt washer, that can be mounted onto the receiving means. The absorptive element is located either in between the weight elements or adjacent to the nut or adjacent to the stop of the base element. It is also possible to arrange more than one absorptive element, in particular more than one felt washer, on the receiving means which enhances its effect (described next). The absorptive element is preferably made of felt and soaked or impregnated with an attractant. This attractant can either be a chemical or a natural attractant. The felt washer is therefore used to stimulate the odor of prey and attract fish during fishing.

In another preferred embodiment of the present invention, the base element, the receiving means and the weight elements are made of metal. Due to use of the weight means in the water, stainless steal is preferred because it is generally rust proof. The advantage of metal is its high rigidity and its abrasion, respectively, friction resistance. Furthermore, its ferromagnetic properties can be used to attach further magnetic elements that are attracted due to magnetic forces of the weight means, so for example, a magnetic hook or a further magnetic element with an eyelet or the like.

In an alternative embodiment of this invention, the base element and receiving means together with the assembled weight elements correspond to the shape of a fish body. Base element and mounted weight elements are consequently at least partially streamlined in shape when assembled on the receiving means. The weight elements have preferably a triangular shape whereby the length of each flank can either be identical (all three flanks same length) or similar (different or partially different lengths of the flanks). In case of triangular formed weight elements, the weight elements are preferably continuous with the shape of the base element in the area of the stop.
An alternative embodiment comprises a receiving means with a base element, the latter having at least one holding means. This holding means is preferably projecting from a centre line A which extends circumferentially along the base element. The projection, respectively, holding means can be formed from a metal sheet or the like. An eyelet is arranged at an outer end of the projection into which a hook, a fishing line or/and a fishing lure can be attached to. The holding means also acts as stabilizing means when assembled with the fishing lure body described below.

An inventive fishing lure system according to claim 12 comprising the weight means described above and a lure body is further provided. The lure body hereby serves as an encasement for the weight means. For the uptake of the weight means, the fishing lure body comprises a cavity with a first opening through which the weight means can be fitted into the inner cavity of the lure body. This first opening is preferably formed as an elongated slit whose length is correspond ing to the length of the receiving means, respectively, bolt so that an easy insertion of the weight means into the fishing lure body is possible. The fishing lure body is preferably made of soft plastic, in particular polyvinylchloride, polyolefin, polyethylene, low density polyethylene or low density polypropylene. Furthermore, a head, a body and a tail are formed from this material so that the lure body has the shape and size of a prey. Here, the shape can be that of a small fish, for example, and the appearance can include a colour chosen to be similar to that of a prey, for example with simulated eyes, scales and gills.
The holding means located at the base element of the weight means engages through a second opening in the fishing lure body. This allows the weight means to be securely located within the inner cavity of the lure body and to rest in a stable position therein. Furthermore, the weight means is protected from the water because the lure body acts as an encasement or wrapping, whereby the holding means project through the second opening, respectively, second openings in case of more than one holding means. The fisherman can then attach a fishing line or a hook to the eyelet of the holding means when the weight means is inserted into the lure body.

When the weight means is encased by the fishing lure body, the fisherman can hold the head portion of the lure body with one hand whilst pushing the lower body, respectively, tail portion of the fishing lure body upwards so that the receiving means become freely accessible for changing the weight elements. The lure body can therefore remain partially wrapped around the weight means when the fisherman changes the weight of the weight means. This also allows a fishing line or a hook to remain within the eyelet of the holding means because the base element does not have to be pulled out from the inner cavity where it remains during exchange or addition or removal of weight elements. This makes the handling of the fishing lure body with the weight means simple and also enables the fisherman to quickly change the weight elements.

The present invention also relates to a fishing lure system that comprises both, the fishing lure body and the weight means, whereby the lure body encases the weight means after the weight means has been inserted into the inner cavity of the lure body. The fishing lure system allows the fisherman to set a prey into the desired water depth because the weight means is adjustable in weight.

In the following, preferred embodiments of the invention will be described, whereby
Fig. 1a shows a weight means (1) comprising several weight elements
Fig. 1b shows a weight means (1) with a lure body indicated
Fig. 2 shows a weight means without weight elements
Fig. 3a shows a first face of the weight element
Fig. 3b shows a second face of the weight element
Fig. 4 is a perspective view of a lure body
Fig. 5 illustrates a weight means within a lure body
Fig. 6 is a bottom view of the lure body

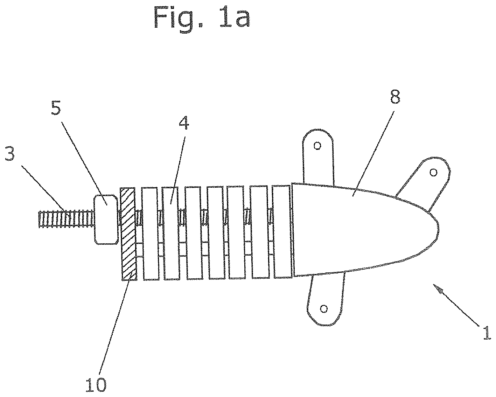

Fig. 1a shows a weight means 1 comprising a receiving means 3 being attached to a base element 8. In this example, seven weight elements 4 are stuck onto the receiving means 3 and are arrested by detent means 5. This detent means 5 is formed as a nut in this preferred embodiment. This nut can be also a self-locking nut. Apart from the weight elements 4, a felt washer 10 is stuck onto the receiving means 3. The felt washer 10 is located adjacent to the detent means 5. Furthermore, the receiving means 3 is formed as a longitudinal threaded bolt.

In this embodiment, the threaded portion of the bolt reaches over the whole length of the bolt.

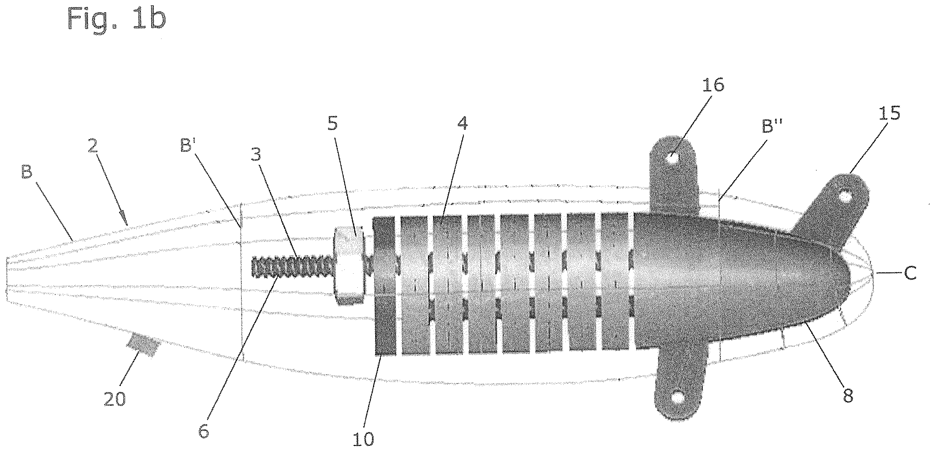

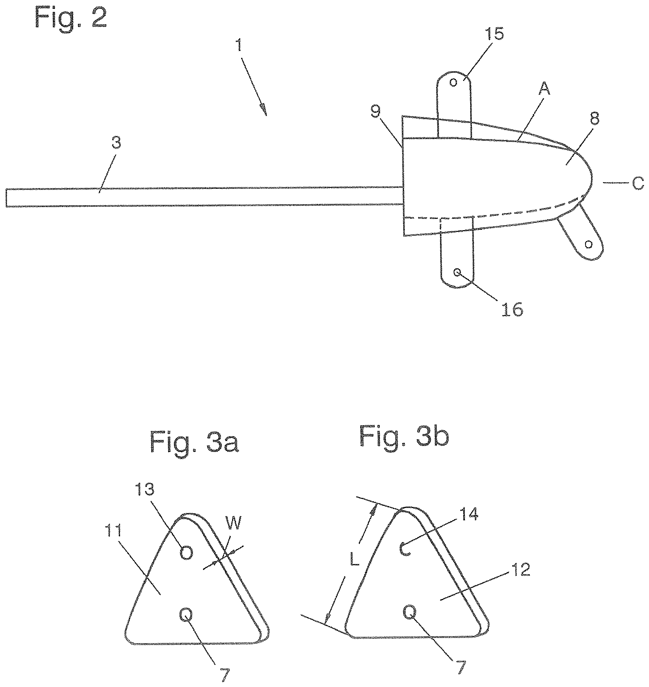

Fig. 1b again shows the weight means 1 whereby a fishing lure body 2 is indicated with horizontal lines B and vertical lines B' and B". The area between reference sign B' and reference sign B" of the illustrated, respectively, indicated fishing lure body 2 comprises an inner cavity 17 (not shown here) that also reaches into the head portion C. As can be seen from fig. 1b, the weight means has a smaller size than the fishing lure body, so that an uptake of the weight means 1 within the inner cavity 17 is easily possible. The weight means 1 is located within the indicated fishing lure body 2 whereby a magnet 20 is arranged at the tail bottom (lower area left from B') of the denoted fishing lure body 2. The base element 8 comprises three holding means 15 that are arranged circumferentially along a centre line A (shown in fig. 2). Each of the three holding means 15 comprises an eyelet 16 located at an outer end of the holding means 15 which protrudes from centre line A of the base element to the exterior surrounding. The holding means 15 is formed from a metal sheet, preferably stainless steel sheet, in this illustrated embodiment. It has to be noted that the number of holding means 15 can vary. In this figure, an optional number of three holding means 15 is illustrated.
A further embodiment of a weight means 1 or adjustable weight body 1 is shown in fig. 2. The weight means 1 comprises the base element 8 whose shape corresponds preferably to a half-cut head of a fish, and the receiving means 3 for the uptake of weight elements 4 (shown in fig. 3a and 3b). The receiving means 3 can be removable attached to the base or head element 8, for example bolted connection. Alternatively, the base element 8 and the receiving means 3 are formed as one piece. The receiving means 3 can also be stuck into the head element 8 and fixed by a glue or similar means, so that the receiving means 3 is not detachable. In this embodiment of the weight means 1, no weight elements 4 are arranged on the receiving means 3. The head element 8 is defined in the form of a lure head and has a stop 9 at the side where the receiving means 3 is attached to the head element 8. Circumferentially along a central line A of the head element are arranged holding means 15. Holding means 15 protrude from the central line A to the outer surroundings. At an exterior end of those holding means 15, an eyelet 16 is provided. Fig. 2 shows three holding means 15 each having at least an eyelet 16.

A weight element 4 is illustrated in fig. 3a and 3b, whereby fig. 3a provides a view of a first side 11 and fig. 3b a view of the opposite side 12 of the weight element 4. First side 11 is also referred to as a first face 11. The opposite side 12 referred to as second face 12. The width W is smaller than the side length L of the weight elements 4. The width W can vary, if necessary. The length L generally corresponds to the side length of the head element whereby this also refers to the shape. In this embodiment, the shape of the weight element 4 is triangular with rounded edges whereby the shape of the head element 8 is also triangular with rounded edges when referring to a sectional view of the head element 8 (shown in fig. 2). However, the base, respectively head element 8 is also tapered towards a front side C. The first face 11 comprises a recess 13 with a circular diameter. This recess 13 is located in the top corner portion of the weight element 4 shown in fig. 3a. The weight element 4 shown in fig. 3b has - at the same position as the recess 13 of fig. 3a - a projection 14 at the second face 12 of the weight element 4. When assembling two weight elements 4 on the weight means 1, the projection 14 of a first weight element engages the recess 13 of a second weight element. This provides a stable connection of the weight elements that are locked into a certain position along the receiving means. An opening 7 in the weight elements 4 is provided for mounting the weight elements 4 onto the receiving means 3. The opening 7 can be formed as a hole and may have a thread. In case the receiving means 3 is a threaded bolt 6 the weight element 4 can be screwed onto the receiving means 3. However, the hole of the weight elements 4 not necessarily needs to have a thread in case the bolt is threaded. Stacking of the weight elements 4 onto the bolt 6 is sufficient. The recess 13 and the projection 14 assist in positioning the weight elements 4 to each other and optionally the first weight element 4 to the head element 8, in case the base element 8 provides a recess 13 or projection 14 at the stop 9.

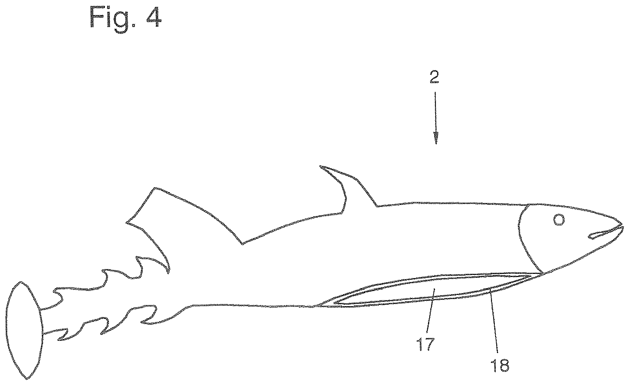

The lure body shown in fig. 4 defines an inner cavity 17 configured for receiving the weight means 1. An entry into the inner cavity 17 is defined by a first opening 18 formed as an elongated slit located at the bottom side of the lure body 2. The location of this first opening 18 at this location is not compulsory and a location of this opening 18 is possible also at the top side of the lure body 2 or aside of the lure body 2. The inner cavity 17 comprises the opening 18 and extends internally within the lure body 2 from a head section of the lure body 2 to the beginning of a tale portion indicated in fig. 1b with B' whereby the area left of B' is referred to as a tail portion. The shape and size of the inner cavity 17 can be adapted to the shape and size of the weight means 1 which is described in fig. 1a, 1b and 2.

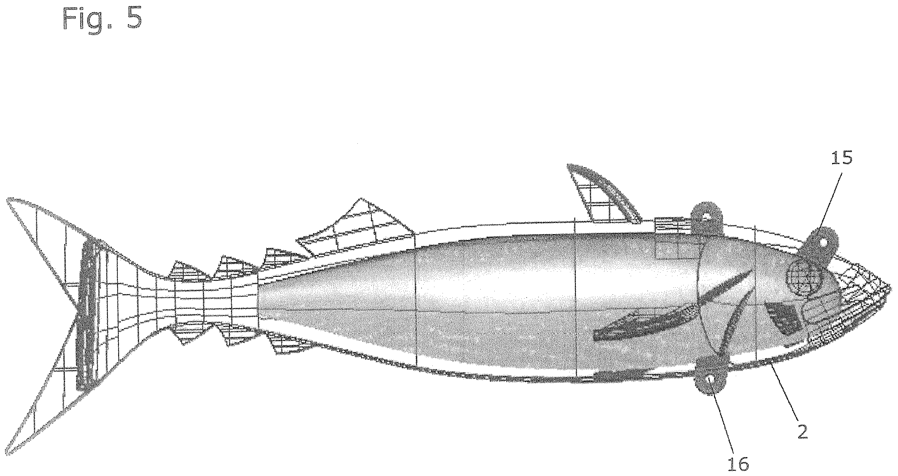

Fig. 5 shows another example of a lure body 2. The lure body 2 is shown from aside and only indicated with lines. The weight means 1 is also only indicated here and located within the inner cavity 17 of the lure body (not shown). The holding means 15 of the weight means 1 are illustrated and extend from the inner cavity 17 through the skin of the lure body 2 to the outside of the lure body 2. The eyelet 16 which is located mostly outside the lure body 2 is consequently easily accessible and allows attachment of a hook or the like.

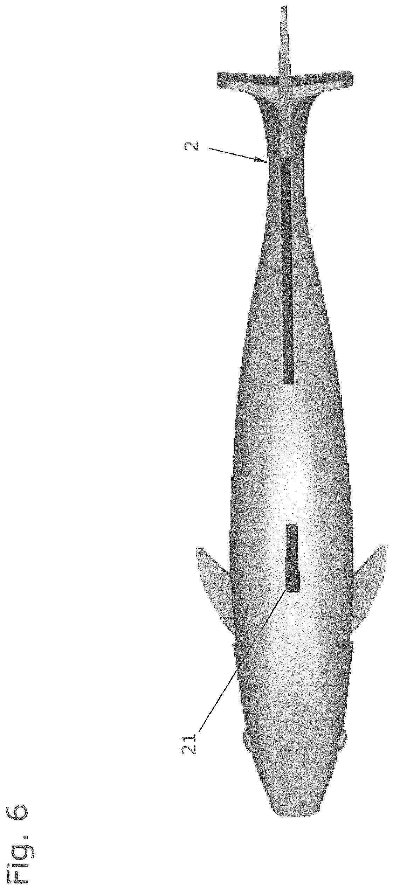

Fig. 6 is a bottom view of an exemplary lure body 2. The opening 18 can be seen which is located closer to the tail portion in this particular embodiment. The size of the opening 18 corresponds to the size of the receiving means 3 (not shown here) so that insertion of receiving means 3 into the inner cavity 17 is possible. Furthermore, a second opening 21 can be seen closer to the head portion. This second opening 21 corresponds to the size of the holding means 15 in order to allow the holding means 15 to be passed through opening 21.

## Claims

1. A weight means (1) for a fishing lure body (2), wherein the weight means (1) comprises a receiving means (3) for the uptake of a plurality of weight elements (4),
a plurality of weight elements (4) mounted onto the receiving means (3) and a detent means (5) for arresting the weight elements (4) arranged on the receiving means (3),
whereby the receiving means (3) is formed as a longitudinal bolt (6) and the weight elements (4) are each formed as a disc having a first face (11) and a second face (12),
**characterized in that,**
the first face (11) comprises at least one recess (13) and the second face (12) comprises at least one projection (14), so that the projection (14) of a first disc can engage the recess (13) of an adjacent disc in an assembled condition of the weight means (1),
whereby recesses (13) and projections (14) of the disc are located at a distance from an opening (7) engaging with the receiving means (3) such that the respective projections (14) and recesses (13) of the plurality of weight elements (4) are connected along an axial line which is parallel to the axis of the receiving means (3).

2. A weight means (1) according to claim 2,
**characterized in that,**
the longitudinal bolt (6) is provided with a thread, in particular formed as a threaded bolt.

3. A weight means (1) according to claim 1 or 2,
**characterized in that,**
the detent means (5) is formed as a clamping device, in particular as a nut, particularly preferred as a self-locking nut.

4. A weight means (1) according to one of the previous claims,
**characterized in that,**
the weight elements (4) are formed as plug-on elements, each provided with the opening (7) for mounting the weight elements (4) onto the receiving means (3).

5. A weight means (1) according to one of claims 1 to 4,
**characterized in that,**
the receiving means (3) comprises
a base element (8) being removably attached to the longitudinal bolt (6), whereby the base element (8) forms a stop (9) for the weight elements (4).

6. A weight means (1) according to one of claims 1 to 4,
**characterized in that,**
the receiving means (3) comprises
a base element (8) formed integrally with the longitudinal bolt (6), whereby the base element (8) forms a stop (9) for the weight elements (4).

7. A weight means (1) according to one of the previous claims,
**characterized in that,**
an absorptive element (10) in the form of a sheet or disc, in particular a felt washer (10), that is stuck onto the receiving means (3) and located adjacent to the detent means (5), whereby the absorptive element (10) releases an attractant to attract prey.

8. A weight means (1) according to claims 5 or 6,
**characterized in that,**
the base element (8), the receiving means (3) and the weight elements (4) are made of
metal, in particular stainless steel.

9. A weight means (1) according to claims 5 or 6,
**characterized in that,**
the weight means (1) comprising the weight elements (4) has a shape of a fish body, preferably a triangular shape, which is continuous with the shape of the base element (8) in the area of the stop (9).

10. A weight means (1) according to one of claims 5 or 6,
**characterized in that,**
the base element (3) comprises at least one holding means (15) that projects from the base element (3)

11. A weight means (1) according to claim 10,
**characterized in that,**
the at least one holding means (15) comprises an eyelet (16) for the uptake of a hook, a fishing line and/or a further lure.

12. Fishing lure system comprising
a weight means (1) according to one of the previous claims, and
a lure body (2) having an inner cavity (17) with a first opening (18), preferably formed as an elongated slit, so that the weight means (1) can be inserted into the lure body (2) through the first opening (18) wherein the weight means (1) is adjustable in weight.

13. Fishing lure system (2) according to claim 12,
**characterized in that,**
the at least one holding means (15) projecting from the base element (8) of the weight means (1) engages through a second opening (21) in the fishing lure body when the fishing lure is in an assembled condition.

## Patentansprüche

1. Gewichtsmittel (1) für einen Angelköderkörper (2),
wobei das Gewichtsmittel (1) umfasst:
ein Aufnahmemittel (3) für die Aufnahme einer Vielzahl von Gewichtselementen (4),
eine Vielzahl von Gewichtselementen (4), die auf dem Aufnahmemittel (3) montiert sind, und
ein Rastmittel (5) zur Verrastung der Gewichtselemente (4), die auf dem Aufnahmemittel (3) angeordnet sind,
wobei das Aufnahmemittel (3) als ein längslaufender Bolzen (6) ausgebildet ist und die Gewichtselemente (4) jeweils als Scheibe mit einer ersten Fläche (11) und einer zweiten Fläche (12) ausgebildet sind,
**dadurch gekennzeichnet, dass**
die erste Fläche (11) mindestens eine Aussparung (13) umfasst und die zweite Fläche (12) mindestens einen Vorsprung (14) umfasst, sodass der Vorsprung (14) einer ersten Scheibe in die Aussparung (13) einer benachbarten Scheibe im montierten Zustand des Gewichtsmittels (1) eingreifen kann,
wobei die Aussparungen (13) und Vorsprünge (14) einer Scheibe mit einem Abstand zu einer Öffnung (7) platziert sind, die so in ein Aufnahmemittel (3) eingreift, dass die entsprechenden Vorsprünge (14) und Aussparungen (13) der Vielzahl Gewichtselemente (4) entlang einer Längslinie verbunden sind, die parallel zur Achse der Aufnahme (3) ist.

2. Gewichtsmittel (1) nach Anspruch 2,
**dadurch gekennzeichnet, dass**
der längslaufende Bolzen (6) mit einem Gewinde versehen ist, und insbesondere als Gewindebolzen ausgebildet ist.

3. Gewichtsmittel (1) nach Anspruch 1 oder 2,
**dadurch gekennzeichnet, dass**
das Rastmittel (5) als Klemmvorrichtung ausgebildet ist, insbesondere als Mutter und insbesondere bevorzugt als selbstschließende Mutter.

4. Gewichtsmittel (1) nach einem der vorhergehenden Ansprüche,
**dadurch gekennzeichnet, dass**
die Gewichtselemente (4) als Aufsteckelemente ausgebildet sind, die jeweils mit der Öffnung (7) versehen sind, um die Gewichtselemente (4) auf dem Aufnahmemittel (3) zu montieren.

5. Gewichtsmittel (1) nach einem der Ansprüche 1 bis 4,
**dadurch gekennzeichnet, dass**
das Aufnahmemittel (3) umfasst:
ein Grundelement (8), welches abnehmbar an den längslaufenden Bolzen (6) angebracht ist, wobei das Grundelement (87) einen Stopp (9) für die Gewichtselemente (4) bildet.

6. Gewichtsmittel (1) nach einem der Ansprüche 1 bis 4,
**dadurch gekennzeichnet, dass**
das Aufnahmemittel (3) umfasst:
ein Grundelement (8), welches einstückig mit dem längslaufenden Bolzen (6) geformt ist, wobei das Grundelement (8) einen Stopp (9) für die Gewichtselemente (4) bildet.

7. Gewichtsmittel (1) nach einem der vorhergehenden Ansprüche,
**dadurch gekennzeichnet, dass**
ein absorptives Element (10) in Form eines Blatts oder einer Scheibe, insbesondere eine Filzunterlegscheibe (10), die auf das Aufnahmemittel (3) aufgesteckt ist und sich neben dem Rastmittel (5) befindet, wobei das absorptive Element (10) einen Lockstoff ausstößt, um Beute anzulocken.

8. Gewichtsmittel (1) nach Anspruch 5 oder 6,
**dadurch gekennzeichnet, dass**
das Grundelement (8), das Aufnahmemittel (3) und die Gewichtselemente (4) aus Metall, insbesondere aus Edelstahl, geformt sind.

9. Gewichtsmittel (1) nach Anspruch 5 oder 6,
**dadurch gekennzeichnet, dass**
das Gewichtsmittel (1), welches die Gewichtselemente (4) umfasst, die Form eines Fischkörpers hat, vorzugsweise eine Dreieckform, welche im Bereich des Stopps (9) fortlaufend mit der Form des Grundelements (8) ist.

10. Gewichtsmittel (1) nach einem der Ansprüche 5 oder 6,
**dadurch gekennzeichnet, dass**
das Grundelement (3) mindestens ein Haltemittel (15) umfasst, welches vom Grundelement (3) vorsteht.

11. Gewichtsmittel (1) nach Anspruch 10,
**dadurch gekennzeichnet, dass**
das mindestens eine Haltemittel (15) eine Öse (16) zur Aufnahme eines Hakens, einer Angelschnur und/oder eines weiteren Köders umfasst.

12. Angelködersystem umfassend
ein Gewichtsmittel (1) nach einem der vorhergehenden Ansprüche, und
einen Köderkörper (2), der einen inneren Hohlraum (17) mit einer ersten Öffnung (18) hat, vorzugsweise ausgebildet als ein länglicher Schlitz, sodass das Gewichtsmittel (1) in den Köderkörper (2) durch die ersten Öffnung (18) eingesetzt werden kann, wobei das Gewichtsmittel (1) im Gewicht angepasst werden kann.

13. Angelködersystem (2) nach Anspruch 12,
**dadurch gekennzeichnet, dass**
das mindestens eine Haltemittel (15), das vom Grundelement (8) des Gewichtsmittels (1) vorsteht, durch eine zweite Öffnung (21) im Angelköderkörper greift, wenn sich der Angelköder im montierten Zustand befindet.

## Revendications

1. Dispositif de poids (1) pour un corps de leurre de pêche (2),
dans lequel le dispositif de poids (1) comprend :
un moyen de réception (3) pour recevoir une pluralité d'éléments de poids (4),
une pluralité d'éléments de poids (4) montés sur le moyen de réception (3), et
un moyen de détente (5) pour arrêter les éléments de poids (4) agencés sur le moyen de réception (3),
dans lequel le moyen de réception (3) est formé comme un boulon longitudinal (6) et les éléments de poids (4) sont chacun formés comme un disque ayant une première face (11) et une seconde face (12),
**caractérisé en ce**
**que** la première face (11) comprend au moins un évidement (13) et la seconde face (12) comprend au moins une saillie (14), de sorte que la saillie (14) d'un premier disque peut s'engager dans l'évidement (13) d'un disque adjacent dans un état monté du dispositif de poids (1),
dans lequel les évidements (13) et saillies (14) du disque sont situés à une distance d'une ouverture (7) s'engageant avec le moyen de réception (3) de telle sorte que les saillies (14) et évidements (13) respectifs de la pluralité d'éléments de poids (4) sont reliés le long d'une ligne axiale qui est parallèle à l'axe du moyen de réception (3).

2. Dispositif de poids (1) selon la revendication 2, **caractérisé en ce**
**que** le boulon longitudinal (6) est pourvu d'un filet, en particulier formé comme un boulon fileté.

3. Dispositif de poids (1) selon la revendication 1 ou 2, **caractérisé en ce**
**que** le moyen de détente (5) est formé comme un moyen de serrage, en particulier comme un écrou, particulièrement préféré comme un écrou autobloquant.

4. Dispositif de poids (1) selon une des revendications précédentes, **caractérisé en ce**
**que** les éléments de poids (4) sont formés comme des éléments embrochables, chacun étant pourvu d'une ouverture (7) pour le montage des éléments de poids (4) sur le moyen de réception (3).

5. Dispositif de poids (1) selon une des revendications 1 à 4, **caractérisé en ce**
**que** le moyen de réception (3) comprend un élément de base (8) fixé de manière amovible au boulon longitudinal (6), l'élément de base (8) formant une butée (9) pour les éléments de poids (4).

6. Dispositif de poids (1) selon une des revendications 1 à 4, **caractérisé en ce**
**que** le moyen de réception (3) comprend un élément de base (8) formé d'un seul tenant avec le boulon longitudinal (6), l'élément de base (8) formant une butée (9) pour les éléments de poids (4).

7. Dispositif de poids (1) selon une des revendications précédentes, **caractérisé en ce**
**qu'**un élément absorbant (10) sous la forme d'une feuille ou d'un disque, en particulier un joint feutre (10), est collé sur le moyen de réception (3) et situé de manière adjacente au moyen de détente (5), l'élément absorbant (10) libérant un moyen d'attraction pour attirer une proie.

8. Dispositif de poids (1) selon les revendications 5 ou 6, **caractérisé en ce**
**que** l'élément de base (8), le moyen de réception (3) et les éléments de poids (4) sont composés en métal, en particulier en acier inoxydable.

9. Dispositif de poids (1) selon les revendications 5 ou 6, **caractérisé en ce**
**que** le dispositif de poids (1) comprenant les éléments de poids (4) a la forme d'un corps de poisson, de préférence une forme triangulaire, qui est continue avec la forme de l'élément de base (8) dans la zone de la butée (9).

10. Dispositif de poids (1) selon une des revendications 5 ou 6, **caractérisé en ce**
**que** l'élément de base (3) comprend au moins un moyen de retenue (15) qui dépasse de l'élément de base (3).

11. Dispositif de poids (1) selon la revendication 10, **caractérisé en ce**
**que** l'au moins un moyen de retenue (15) comprend un oeillet (16) pour recevoir un crochet, une ligne de pêche et/ou un autre leurre.

12. Système de leurre de pêche, comprenant :
un dispositif de poids (1) selon une des revendications précédentes, et
un corps de leurre (2) ayant une cavité interne (17) avec une première ouverture (18), de préférence formée comme une fente allongée, de sorte que le dispositif de poids (1) peut être inséré dans le corps de leurre (2) à travers la première ouverture (18), le dispositif de poids (1) étant réglable en hauteur.

13. Système de leurre de pêche (2) selon la revendication 12, **caractérisé en ce**
**que** l'au moins un moyen de retenue (15) dépassant de l'élément de base (8) du dispositif de poids (1) s'engage à travers une seconde ouverture (21) dans le corps de leurre de pêche lorsque le leurre de pêche est dans un état assemblé.
